**Europäisches Patentamt**

**European Patent Office**

**Office européen des brevets**

(11) Publication number: **0 060 702**
**A2**

## EUROPEAN PATENT APPLICATION

(21) Application number: **82301288.5**

(22) Date of filing: **12.03.82**

(51) Int. Cl.³: **G 01 G 19/40,** G 01 G 23/38, G 01 G 11/00, G 01 G 19/00, B 65 C 9/46

(30) Priority: **12.03.81 GB 8107758**

(43) Date of publication of application: **22.09.82**
**Bulletin 82/38**

(84) Designated Contracting States: **DE FR SE**

(71) Applicant: **MAATSCHAPPIJ VAN BERKEL'S PATENT N.V., P.O. Box 6018 Kelleweg 5, NL-3029 BR Rotterdam (NL)**

(72) Inventor: **Cockram, David John, 2 Fairway Drive, Bulwell Nottingham (GB)**

(74) Representative: **MacDougall, Donald Carmichael et al, Messrs. Cruikshank & Fairweather 19 Royal Exchange Square, Glasgow G1 3AE, Scotland (GB)**

(54) **Weighing, pricing, printing and labelling machines.**

(57) A combined weighing, pricing, printing and labelling machine (10) comprises a weighing station (15) through which a set (12) of belt conveyors traverse a package (20) to be weighed. Station (15) is formed by a weigh cell (13) preferably of the vibrating string type and conveyor (12C) which is mounted over the cell (13) continuously traverses the package (20) through the station (15) so that at least one weight measurement is established by cell (13) during the transit of the package (20) through the station (15). The weight measurement is delivered electrically to a computational facility (18) having an output which drives a label printer (17) which in turn delivers the printed label to a labeller (16) arranged to affix the printed label to the weighed package (20) at a labelling station through which the set (12) of conveyors move and which is downstream of the weighing station (15). Associated with the weighing station (15) is a detector ($X_2$) for providing a gating signal to the computational facility (18) when a package (20) is located in the station (15). A further detector arrangement ($X_2$, $X_3$) is provided in station (15) for inhibiting operation of the printer (17) and labeller (16) consequential to the presence of more than one package (20) simultaneously in said weighing station (15). A still further detector ($X_1$) is provided at the input end of the weighing station (15) for interrupting motion of the conveyors (12A, 12B) which deliver the package (20) to the station (15), this interruption being of a predetermined duration sufficient to permit transit of a package (20) through the station (15) prior to a subsequent package (20) being delivered to the station (15) for weighing.

ACTORUM AG

## WEIGHING, PRICING, PRINTING AND LABELLING MACHINES

This invention relates to combined weighing, pricing, printing and labelling machines.

In the packaging industry, particularly the food industry, there is a need to provide a combined weighing, pricing, printing and labelling machine arranged to affix a label on a package such that the label bears information derived from the weight of the package. Such a machine is presently available and incorporates a weighing station which provides weight data to a printer associated with the labeller and a conveying mechanism for advancing a weighed package from the weighing station to the labeller, the conveying mechanism, the printer and the labeller being co-ordinated in their operation so that a package placed at the weighing station is automatically advanced by the conveying mechanism and the label affixed thereto after the weight reading has been determined at the weighing station. Usually the weight related data on the label is the price of the packaged commodity, the printer having been pre-programmed with price/unit weight data and having a computational facility for deriving the price of the packaged commodity from the weight data and the price/unit weight data. In the known machine correct operation is only achieved when the package is placed at rest in the weighing station during the weighing operation and the system is designed accordingly.

It is an object of the present invention to provide an improved form of combined weighing, pricing, printing and labelling machine.

According to the present invention there is provided a combined weighing, pricing, printing and labelling machine comprising a weighing station, a printer, computation means, a labeller and a conveying mechanism for presenting to the labeller a package whose weight has been determined in said weighing station, and wherein the weighing station comprises a weigh cell surmounted by a belt conveyor which is continuously driven, the weigh cell being arranged to provide at least one weight measurement of a package during its continuous transit through the weighing station and said computation means being operable in response to said weight measurement to provide weight data for actuation of said printer.

Preferably the weighing station is constructed to have a length related to the transit time of a package in said station and the time interval required for a said weight measurement is such that only two such weight measurements are taken for a package of predetermined maximum size during its transit through the weighing station and said computation means is operable to provide said weight data in response to a comparison of said two weight measurements.

Conveniently the weighing station comprises first detector means for establishing the presence of a package in said weighing station and providing a gating signal to said computational means such that said printer and labeller are only activated consequential to the presence of a package in said weighing station.

Conveniently also the weighing station comprises second detector means for inhibiting operation of the printer and labeller consequential to the presence of more than one package simultaneously in said weighing station.

Preferably also the machine comprises a conveyor arrangement for delivering packages to be weighed to the weighing station, said arrangement comprising an infeed conveyor and an accumulator conveyor, the infeed conveyor being driven marginally more slowly than the accumulator conveyor whereby the spacing between a series of packages is enlarged prior to the weighing station. Conveniently the infeed conveyor is operated at 60 ft/min and the accumulator conveyor is operated at 65 ft/min.

Preferably detector means is provided at the junction of said conveyor arrangement and the weighing station and arranged to interrupt motion of said conveyor arrangement for a predetermined time interval after delivery of a package to the weighing station, said time interval being sufficient to permit transit of such package through the weighing station.

An embodiment of the present invention will now be described by way of example with reference to the accompanying drawings.

The combined weighing and labelling machine 10 which is illustrated comprises a housing 11 supporting a set 12 of belt conveyors individually identified, as will be explained, as 12A, 12B, 12C, 12D and 12E. Conveyor 12C is mounted over a weigh cell 13 and forms part of a weighing station 15 to which packages are delivered by conveyors 12A, 12B and from which packages are collected by conveyors 12D, 12E, for presentation to a labeller 16 acting in conjunction with a printer 17 whereby a label with weight dependent data is affixed to the package on conveyor 12E.

The weigh cell 13 is arranged to provide a plurality of weight measurements of the package during its continuous transit through the weighing station 15 caused by the uninterrupted movement of conveyor 12C, the weight measurements produced by the cell 13 being delivered to a computational facility 18 having an output which drives printer 17. Facility 18 is arranged to provide sequential comparison of pairs of weight measurements and when the comparison indicates identity within a predetermined tolerance printer 17 is actuated. A display/control unit 19 is provided in order to display the information transmitted to the printer 17 and in order to feed to facility 18 predetermined information such as the price/ unit weight of the commodity contained in the package. Facility 18 and unit 19 are physically contained in a common housing 25.

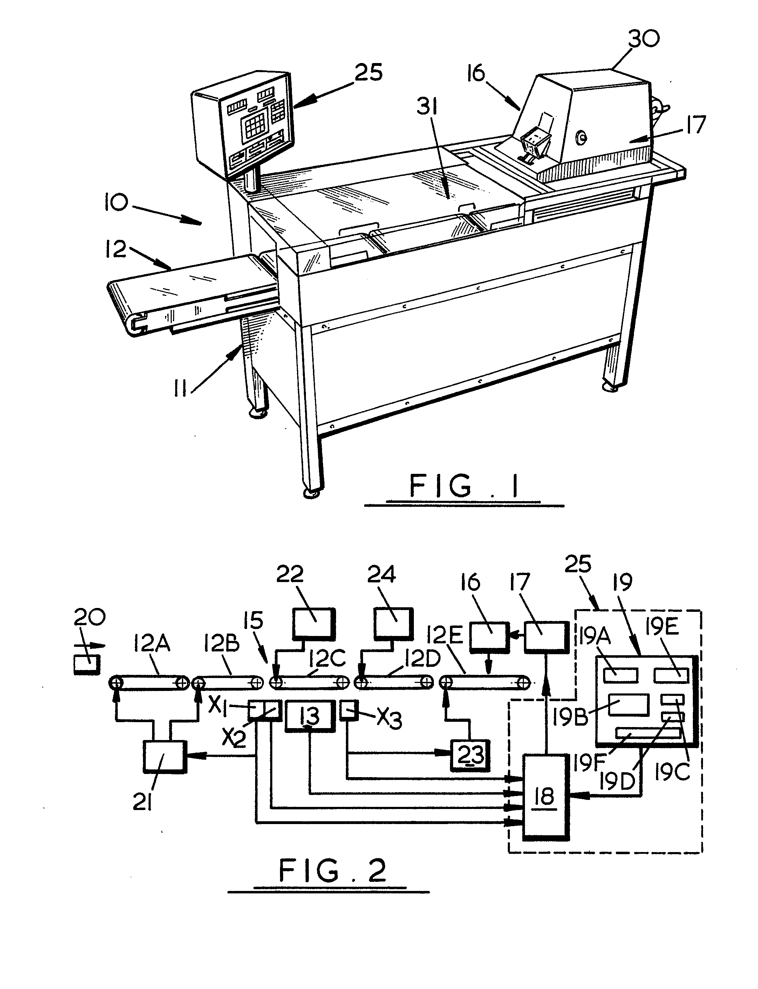

With reference to Fig. 2 the package 20 is delivered to conveyor 12A which forms an infeed conveyor operated by drive unit 21 to run at 60 ft/min. from which package 20 is delivered to accumulator conveyor 12B driven by drive unit 21 at 65 ft/min. Conveyors 12C and 12D are driven continuously by respective drive units 22, 24, at 65 ft/min. and when package 20 is delivered to conveyor 12C detector $X_1$ issues a signal to drive unit 21 to interrupt motion of conveyors 12A, 12B for a predetermined time interval if a package is already on conveyor 12C. Upon leaving station 15 detector $X_3$ issues a signal to the drive unit 23 for conveyor 12E for interrupting motion of conveyor 12E after a predetermined time delay sufficient to permit package 20 to arrive at a predetermined position on conveyor 12E beneath labeller 16, the inhibition lasting for sufficiently long to enable labeller 16 to affix a label onto package 20 prior to the package being removed from the machine 10 by renewed motion of conveyor 12E at 65 ft/min.

Detector $X_2$ also delivers its output signal to facility 18 to function as a gating signal indicative of the presence of a package 20 in station 15. Detector $X_1$ is located immediately adjacent a detector $X_2$ at the junction between conveyors 12B, 12C, and detector $X_2$ in combination with detector $X_3$ jointly or severally provide inhibit signals to facility 18 to indicate the presence of more than one package 20 simultaneously present in station 15 and $X_2$ is also used to determine pack oversize, as a result of which printer 17 and labeller 16 are prevented from operating.

The weigh cell 13 is of the vibrating string type comprising first and second vibrating strings each providing a series of output pulses one such pulse series being utilised to determine a gating interval during which time the pulses of the other pulse series are counted to provide a measure of the package 20 in weighing station 15. The weigh cell 13 is particularly arranged so that a weight measurement is taken over a 0.2 second time interval, detector $X_2$ being utilised by facility 18 to ensure synchronism of the weight measurements with delivery of package 20 to station 15.

Conveyor 12C is designed to be about 19" in length which in combination with the conveyor motion set at 65 ft/min., i.e. 13" per second, enables two weight measurements to be taken on a package 10" in length, with a greater number of weight measurements being possible on packages of shorter length. These two weight measurements of pairs thereof of the successive weight measurements are compared by facility 18 and if they are within a pre-set tolerance such as one division of measurement, one is utilised in combination with the information provided by display/control unit 19 to establish the signal to printer 17. Unit 19 comprises a display area 19A on which is displayed the weight measurement determined by facility 18 after the comparison process, a numeric keyboard 19B and commodity code 19C which together enable an operator to enter price per unit weight data to facility 18, this data being displayed at 19D. The computed price is displayed at 19E, this being the data transmitted by facility 18 to printer 17 and appearing together with measured weight and price per unit data on the label affixed to package 20 by labeller 16. Unit 19 also comprises a bank of warning lamps 19F for providing rapid indication of a malfunction of the machine 10.

In Fig. 1 it will be noted that display/control unit 19 is mounted in housing 25 on a pedestal at one end of housing 11 whereas labeller 16 together with printer 17 are mounted within a cover 30 at the other end of the machine.

The set 12 of belt conveyors is arranged to move the packages from the vicinity of housing 25 in the direction of housing 30 along a channel within housing 11 having a hinged transparent top cover 31 which prevents operator interference with conveyor 12C. Cover 31 is provided with electrical interlocks such that when opened operation of drive units 21, 22, 23, 24, is inhibited.

Each of the conveyors of set 12 is in the form of a lightweight length of fabric extending around a pair of rollers and presenting an uninterrupted surface for transport of package 20. Adjacent conveyors are close together so that the space between conveyors is minimised. Conveyor 12C is inclined at a small angle below the plane defined by the top surfaces of conveyor 12A, 12B, so that a package 20 delivered to the weighing station 15 has its weight rapidly transferred to conveyor 12C. Because conveyor 12A is driven marginally more slowly than conveyor 12B when packages transfer from conveyor 12A to conveyor 12B, the spacing between a series of such packages is enlarged so that there is sufficient space between adjoining packages on entry to the weighing station 15 to permit detector $X_1$ to function without detector $X_2$ functioning other than in exceptional circumstances such as may occur when adjoining packages overlap one another. This arrangement permits 40 packages per minute to be processed in machine 10 and of course if the packages are shorter than the maximum design length the processing rate can be correspondingly increased.

Labeller 16 is conveniently a Berkel ED labeller as commercially available incorporating a pivotal applicator arm whereby labels can be applied to packages 20 within a very wide height range, for example O-5". This form of printer and labeller is relatively slow in operation and it is to accommodate such a printer and labeller that conveyor 12D is provided. If an alternative form of printer and labeller with a faster speed is utilised it may be possible to dispense with conveyor 12D.

It will now be appreciated that the machine described is of relatively simple construction, easy to operate, interlocked against operator interference and versatile as regards further development being carried out to increase the number of packages per minute and the weight range of individual packages which can be processed. Weight measurements of the packages are taken whilst the packages are in transit with the printer 17 being operated only after a comparison has taken place of at least two weight measurements. The limitation on each weight measurement is determined by the characteristics of the weigh cell 13, but alternative weigh cells are available to accommodate different weight ranges whilst retaining the dual string characteristic. For most purposes a cell capable of measuring 0-5 kgs. will be sufficient. Other forms of weigh cell may be used as an alternative to the vibrating string type to achieve the same results.

## CLAIMS

1.   A combined weighing, pricing, printing and labelling machine comprising a weighing station (15), a printer (17), computation means (18), a labeller (16) and a conveying mechanism (12) for presenting to the labeller (16) a package (20) whose weight has been determined in said weighing station (15), and characterised in that the weighing station (15) comprises a weigh cell (13) surmounted by a belt conveyor (12C) which is continuously driven, the weigh cell (13) being arranged to provide at least one weight measurement of a package (20) during its continuous transit through the weighing station (15) and said computation means (18) being operable in response to said weight measurement to provide weight data for actuation of said printer (17).

2.   A machine as claimed in claim 1, characterised in that the weighing station (15) is constructed to have a length related to the transit time of a package (20) in said station (15), and the time interval required for a said weight measurement is such that only two such weight measurements are taken for a package (20) of predetermined maximum size during its transit through the weighing station (15), and said computation means (18) is operable to provide said weight data in response to a comparison of said two weight measurements.

3.   A machine as claimed in either preceding claim, characterised in that the weighing station (15) comprises first detector means $(X_2)$ for establishing the presence of a package (20) in said weighing station (15) and providing a gating signal to said computational means (18) such that said printer (17) and labeller (16) are only activated consequential to the presence of a package (20) in said weighing station (15).

4.   A machine as claimed in claim 3, characterised in that the weighing station (15) comprises second detector

means ($X_2$, $X_3$) for inhibiting operation of the printer (17) and labeller (16) consequential to the presence of more than one package (20) simultaneously in said weighing station (15).

5. A machine as claimed in any preceding claim, characterised by a conveyor arrangement (12A, 12B) for delivering packages (20) to be weighed to the weighing station (15), said arrangement (12A, 12B) comprising an infeed conveyor (12A) and an accumulator conveyor (12B), the infeed conveyor (12A) being driven marginally more slowly than the accumulator conveyor (12B) whereby the spacing between a series of packages (20) is enlarged prior to the weighing station (15).

6. A machine as claimed in claim 5, characterised in that detector means ($X_1$) is provided at the junction of said conveyor arrangement (12A, 12B) and the weighing station (15) and arranged to interrupt motion of said conveyor arrangement (12A, 12B) for a predetermined time interval after delivery of a package (20) to the weighing station (15), said time interval being sufficient to permit transit of such package (20) through the weighing station (15).

FIG. 1

FIG. 2